# EUROPEAN PATENT SPECIFICATION

(11) **EP 2 134 193 B1**
(45) Date of publication and mention of the grant of the patent: **20.07.2016**
(21) Application number: 08732642.7
(22) Date of filing: 21.03.2008
(51) Int. Cl.: A23L 27/40

(54) **NON-BITTER SODIUM-FREE OR LOW-SODIUM SALT COMPOSITION**
NICHT BITTERE NATRIUMFREIE BZW. NATRIUMARME SALZZUSAMMENSETZUNG
COMPOSITION SANS SODIUM OU À FAIBLE TENEUR EN SEL DE SODIUM NON AMÈRE

(30) Priority: 22.03.2007 US 896307 P
(43) Date of publication of application: 23.12.2009
(73) Proprietor: Ecosalt Corporation, Washington, DC 20007 (US)
(72) Inventor: VASQUEZ, Ramon, Efrain, Drumond, Lujan De Cuyo (AR)
(74) Representative: Dendorfer, Claus
(86) International application number: PCT/US2008/057804
(87) International publication number: WO 2008/116142

(56) References cited:
- WO-A1-2005/094615
- WO-A2-2005/056477
- US-A- 4 451 494
- US-A- 5 098 723
- US-A1- 2005 220 975
- US-A1- 2007 059 428
- US-B1- 6 743 461

## Description

### BACKGROUND OF THE INVENTION

### Field of the Invention

The present invention relates to a stable, sodium- free or low-sodium seasoning composition of agreeable salty taste very similar to common table salt, intended for consumption by the overall population, i.e., youth, adults, elderly, and pregnant women. Said composition also acts as a dietary supplement and confers calcium, potassium, magnesium and Vitamin C to the diet.

### Description of the Prior Art

The present composition aids in preventing or treating certain diseases, such as hypertension, osteoporosis, and obesity, amongst others, which stem from the consumption of sodium. It is intended to be used throughout the pre-, inter-, and post-cooking of foodstuffs, as is common table salt, in the household and the food processing industry.

Many attempts at substituting common table salt are known but have come to naught or have yet to attain the desired success because they mainly comprise potassium chloride; and, hence, confer a bitter residual taste. This bitter taste inhibits the compliance of those who must restrict sodium intake per medical recommendation, causing grave consequences. In arterial hypertension for instance, reduction of sodium intake is a mainstay, as sodium produces a direct augmentation of blood pressure.

Sodium toxicity to the body is demonstrated through a decrease of nitric oxide (NO). NO is a natural substance that is actively involved in cardiovascular system regulation. NO is beneficial to health because it sustains healthy blood vessels; protects against vascular, heart, cerebral, and renal diseases, reduces arterial tension values by producing vasodilatation; prevents the onset of ischemic diseases because of its antiatherogenic and antithrombotic effect; helps combat infections; lowers pulmonary hypertension; and aids in destroying cancerous tumors. [0005] Per scientific research, a high-sodium diet reduces NO levels and, subsequently, augments the risk of developing cardiac, vascular, renal, and cerebral diseases. Sodium relates to an increase in arterial pressure, mainly because of the lack of vascular dilatation from NO reduction.

The restriction of sodium intake, in turn, helps to prevent and treat various diseases and improves overall public health. That a simple dietary measure, i.e., sodium-intake reduction, prevents arterial hypertension - a disease that retains high rates of morbidity and mortality in developed countries - has been proven. The 50 million Americans who undergo hypertension are advised to maintain a low-sodium diet - about 1,500 milligrams per day.

Current nurturing in industrialized countries does not bestow the enough of the basic nutrients of a complete diet to children, adolescents, pregnant women, and the elderly. Therefore, they require nutrients bestowed by dietary supplements found in massive elements, such as water and salt. These elements are an important part of human dietary requirements. Humans are subjected to a dependence on them. Consequently, we must consume them every day of our lives. That humans choose to pay to drink low-sodium water but cannot easily find low-sodium nourishment, which would benefit their lives, seems contradictory.

The FDA recommends a daily 500-mg minimal and 2,400-mg maximal sodium intake. Notwithstanding, the average American takes in more than 4,000 mg of sodium per day; three-fourths of which come from the processed foodstuffs and nourishment ingested. The American Public Health Association (APHA) has drafted a proposal to reduce sodium content in processed foodstuffs by 50% within the next 10 years. The APHA estimates the change could reduce the number of hypertension sufferers by 20 percent, eventually saving 150,000 lives a year.

The FDA is currently considering the enactment of regulations on sodium levels in foodstuffs that claim to have "healthy nutrients."

There is need for new salt substitutes of sodium- free or low-sodium content having an agreeable salty taste, for use as a dietary supplement, and to reduce the general use of harmful sodium chloride. [0011] An object of the invention is to provide a truly rich and delicious sodium- free salt, which can be used in the household and in the food processing industry.

A sodium-free salt accepted by the general populace has not been attained. The undesirable consequences resulting therefrom can be seen on a daily basis; namely, a periodically heightened intake of salty fats that are so utterly interrelated that they lead to concordant hypertension and obesity, which are the greatest maladies of the current century.

That a reduction in sodium intake decreases arterial pressure in both the hypertensive and the normotensive is scientifically proven. Sodium relates to an increase in arterial pressure on the grounds of its failure in vascular dilatation owing the reduction of nitric oxide that it generates.

A reduction of sodium intake is prescribed to patients who undergo diseases that affect their cardiovascular systems because many of said patients present altered renal capacities to excrete the sodium.

Cardiac ischemic disease is the foremost cause of death in the western world. Over 5 million people in the United States alone are diagnosed annually with the disease. A reduction in salt intake in patients who undergo mild cardiac insufficiency can substantially improve measures against symptoms, facilitate activation of certain medications and, thereby improve patient quality of life.

Per the Department of Medicine, Division of Gastroenterology, University of Massachusetts Medical Center, gastric cancer is the second most common cause of cancer related to mortality in the world, and the fourteenth of all causes of mortality. Detection of the disease commonly occurs at an advanced stage so that the overall survival rate is poor. Sodium retains a positive correlation with the incidence of gastric cancer. One of the recurrent findings in medical tests performed on patients undergoing gastric cancer is elevated salt intake levels.

Patients presenting renal insufficiency must restrict sodium intake in order to control known metabolic alterations, such as hydrosilane retention, and evade the progression of the insufficiency. Said measures reduce the formation of edemas and help to control arterial pressure - above-normal rates thereof contribute to the progression of renal damage.

In accordance with the National Heart, Lung and Blood Institute (NHLBI), overweight individuals consume heightened values of calories and sodium. Consequently, they retain more sodium than individuals who are not overweight.

In addition, research conducted by the NHLBI indicates that, among overweight adults, there is an increase of 89% in mortality risk due to cerebral damage for every additional 100 mmol of sodium ingested.

A diet consistent with high-sodium intake reduces the level of nitric oxide and, in turn, augments the risk of developing cardiac, vascular, renal, and cerebral diseases.

Accordingly, a low-sodium diet benefits the hypertensive, elderly, obese, salt-sensitive, pregnant women, children, Syndrome X patients - those afflicted by insulin resistance, hyperinsulinism, abnormal intolerance to glucose, arterial hypertension, hypertriglyceridemia, and low HDL-cholesterol - as well as the remainder of the population.

Causes of cardiovascular disease in adults commence at an early age. These diseases must be prevented at the commencement of childhood. High blood pressure is an important factor of cardiovascular risk. Accordingly, pediatricians should control not only children undergoing hypertension but also those who are normotensive. Preemptive measures should be duly taken to modify factors, such as obesity and high-salt intake, which lead to obesity.

This special composition of agreeable salty taste can wholly substitute for common salt, as it does not display the uniquely bitter taste of potassium chloride compared to common table salt. This quality is foremost and helpful in the household.

A calcium- and potassium-rich diet is beneficial to health. Calcium is indispensable to osseous health. "A salt-rich (sodium chloride) diet is prejudicial to osseous health as it increases the loss of urinary calcium," stated by Dr. Sellmeyer, Director the University of California San Francisco, and by Mt. Zion Osteoporosis Center. Also, because the body requires calcium for many other functions - including muscular contraction - if calcium excretion is heightened, the body responds by extracting calcium directly from the bones; thus weakening them, i.e., activating the onset of osteoporosis. Hence, the body must receive an adequate quantity of calcium - between 1,000 and 1,300 mg per day. The research performed by Dr. Sellmeyer suggests that a diet rich in potassium could counterattack the negative effect on osseous health of a diet rich in salt (sodium chloride).

Calcium from an ordinary diet is insufficient. Concordantly, calcium intake must be enhanced. To achieve proper intake of minerals, massive enrichment of water and salt with these nutrients is imperative. Regarding water, schemes have been concocted via usage of mineral water. Regarding salt, the invention herein will bestow a like effect.

Dietary supplements of potassium and calcium reduce hypertension. Accordingly, as proposed in the "The Seventh Report of the Joint National Committee on Prevention, Detection, Evaluation and Treatment of Blood Pressure 2003" by the National Heart, Lung and the Blood Institute's National High Blood Pressure Education Program, all people should adopt healthy lifestyles to prevent the augmentation of blood pressure, and those who are undergoing hypertension should do so via a nurturing program by the Dietary Approaches to Stop Hypertension (DASH) - a diet enriched with potassium and calcium and reduced in sodium.

Potassium provides a fundamental effect on health as it protects the human organism from certain diseases, such as osteoporosis and hypertension. An increase of potassium content augments the amount of sodium excreted by the body. The recommended daily allowance of potassium is 2,000 mg, albeit some experts recommend 3,500 mg daily intake to prevent high blood pressure. Nonetheless, the average American ingests only between 800 and 1,500 mg of potassium per day.

Reports suggest that the rate of regional deaths due to cardiovascular diseases is inversely proportional to the hardness of the drinking water. Magnesium in hard water produces said protective effect. Magnesium is insufficient, in modern foodstuffs, to meet daily requirements. That magnesium supplements protect against cardiovascular damage and arrhythmias has been proven. The recommended daily allowance of magnesium lies between 300 and 500 mg; albeit in industrialized countries, only 250 mg of magnesium are ingested per day.

Therefore, a sodium-free or low-sodium composition that can substitute for common table salt and contains sufficient calcium, potassium, and magnesium to contribute an appropriate dietary supplement, is greatly needed.

WO 2005/094615 A1 discloses a sodium-free or low-sodium seasoning composition that generally comprises an acidulant selected from the group consisting of citric acid, tartaric acid, fumaric acid, lactic acid and mixtures thereof; a potassium salt; a calcium salt; a magnesium salt; and rice flour. According to one disclosed example, the seasoning composition comprises 33% (by weight) potassium chloride, 22% tartaric acid, 16% magnesium sulphate, 25% rice flour, and 4% calcium phosphate.

### SUMMARY OF THE INVENTION

An objective of the present invention is to provide an agreeably salty seasoning composition that is easy to adapt by people of all walks of life who have become inured to common table salt

Another objective is to purvey a salt that confers a dietary supplement to the body, in particular Vitamin C, potassium, calcium or magnesium supplements.

These objectives are secured via a seasoning composition or salt substitute that comprises ascorbic acid and, as acidulants, citric acid and tartaric acid; a potassium salt; a calcium salt; a magnesium salt; and rice flour.

According to a possible embodiment, the seasoning composition also confers an appropriate dietary supplement, and comprises ascorbic acid; as well as between 2 and 40% by weight of rice flour; between 15 and 65% by weight of potassium chloride or potassium citrate; between 5 and 40% by weight of the acidulants; between 2 and 15% by weight of calcium chloride or calcium phosphate; and between 10 and 30% by weight of magnesium sulphate.

In possible embodiments, the seasoning composition further contains iodine in an amount of 1 part per 30,000 by weight, or more.

In possible embodiments, the seasoning composition further comprises 0.5 to 8.5% by weight of flavoring agents selected from the group consisting of garlic powder, pepper powder, onion powder, celery powder, sweet basil, thyme powder, dehydrated parsley, sweet red pepper powder, and spicy red pepper and mixtures thereof.

In possible embodiments, the seasoning composition further comprises stabilizing agents fit for human consumption, including calcium phosphate and calcium silicate, present between 0.5 and 5% by weight.

In possible embodiments, the seasoning composition is for household use, in a salt shaker.

Another object is to provide a method for seasoning food with a salty taste.

According to the invention, the above object is addressed by a method for seasoning food with a salty taste, comprising: adding to food for human consumption an effective amount of a sodium-free or low-sodium seasoning composition, comprising ascorbic acid and, as acidulants, citric acid and tartaric acid; a potassium salt; a calcium salt; a magnesium salt; and rice flour.

In possible embodiments of the above method, the potassium salt is potassium citrate or potassium chloride and is present between 15 and 65% by weight; acidulants are present between 10 and 30% by weight; the calcium salt is calcium chloride or calcium phosphate and is present between 2 and 15% by weight; and rice flour is present between 2 and 40% by weight.

### DESCRIPTION OF THE PREFERRED EMBODIMENTS

The compounds in the seasoning composition of agreeably salty taste of the present invention are present in various proportions.

The rice flour may be present between 2 to 40% by weight, preferably 5 to 30%, more preferably 15 to 25%.

Sodium chloride may be present between 0 to 50% by weight, preferably 15 to 25%.

Potassium chloride may be present between 15 to 65% by weight, preferably 25 to 35%.

The acidulant compound may be present between 5 and 40% by weight, preferably 10 to 30%. All types of organic acids that are acceptable for use in food may be used - preferably citric acid, tartaric acid, lactic acid, ascorbic acid and/or fumaric acid - are contemplated. According to the invention, the seasoning composition comprises at least ascorbic acid and, as acidulants, citric acid and tartaric acid.

The magnesium salt may be present between 10 to 30% by weight, preferably 15 to 25%. All magnesium salts fit for human consumption are contemplated, preferably magnesium sulphate and magnesium chloride.

The compositions of the invention may be produced by combining the required amounts of solid raw materials, which may be finely or coarsely powdered, in scales or crystals then processed in an industrial mixer, in a manner well-known in the art; finely powdered raw materials are preferred.

Specific flavoring agents may vary per market preferences. A diversity of types and combinations of flavoring agents are contemplated and may be present between 0.5 and 8.5% by weight, preferably 1 to 6%.

Chemical stabilizing compounds may be individually present between about 0.5 - 10% by weight, preferably 1 to 5%. These include calcium phosphate and calcium silicate. [0043] The great advantage of the present invention is that it has a real salty taste without bitterness, which is generally unacceptable to the human palate and often rejected for human consumption.

The composition of the present invention is beneficial because it contains low quantities of sodium or no sodium, and it provides the human organism with a dietary supplement of calcium, potassium, magnesium and C Vitamin, all of which are greatly required by the whole of world population. Accordingly, said invention is beneficial to the population of a country as it prevents the onset of arterial hypertension, osteoporosis, obesity, increased arterial pressure and edema - including the complications therefrom - in adults, pregnant women, and children. In turn, it strengthens the effect of medication for arterial hypertension. Consequently, such treatment becomes more affordable and effective for all patients; evades the need for medication-based treatments; reduces the need for surgical intervention, additional follow up (and the onset of complications therein), admittance to hospitals (amongst the hypertensive); prevents the onset of certain diseases, such as gastric cancer (among the overall population); reduces the progression of certain diseases, such as renal insufficiency; and avails in the treatment and prevention of short-term and long-term diseases.

In our experience the particular salty taste of the present invention produces no rejection whatsoever by any person (either adult or child), owing to a mixture of compounds that is wholly different from any other product known to date. Given the salinity of potassium chloride, calcium chloride, and magnesium salt, the characteristically bitter residual taste of potassium chloride is totally neutralized by the acid, e.g., tartaric acid, and rice flour. The tartaric acid, in turn, enhances the acidic aftertaste and further strengthens the salty taste.

Said composition imitates the taste of common table salt because it provides flavor characteristics, such as saltiness, sourness, and acidity, that are typical of sodium chloride. Consumer taste acceptance and flavor testing, by a panel of untrained judges of varied ages, education, and both genders, show that the presence of rice flour neutralizes the bitterness, but not the salinity. [0047] Saline capacity is augmented when two or more salty elements are blended.

In the present invention several salt compounds are combined, conferring an agreeable saltiness that is essentially non-bitter.

The present invention may be used on any type of edible product that requires saltiness, such as soups, broths, juices, vegetables, fish, chicken, meats, mayonnaise, sauces, and others.

The following comparative examples are useful for a better understanding of the present invention.

### COMPARATIVE EXAMPLES

### COMPARATIVE EXAMPLE 1

Component Proportion by Weight: Potassium Chloride 33%, Tartaric Acid 20%, Ascorbic Acid 2%, Magnesium Sulphate 16% Rice Flour 25% Calcium Phosphate 4%.

### COMPARATIVE EXAMPLE 2

Component Proportion by Weight: Potassium Chloride 36%, Tartaric Acid 30%, Magnesium Sulphate 23% Calcium Phosphate 11%.

### COMPARATIVE EXAMPLE 3

Component Proportion by Weight: Potassium Chloride 62%, Tartaric Acid 10%, Magnesium Sulphate 23% Calcium Phosphate 5%.

### COMPARATIVE EXAMPLE 4

Component Proportion by Weight: Potassium Chloride 25%, Citric Acid 25%, Calcium Chloride 10%, Sodium Chloride 25%, Magnesium Chloride 5%, Rice Flour 10%.

### COMPARATIVE EXAMPLE 5

Component Proportion by Weight: Potassium Chloride 25%, Tartaric Acid 25%, Magnesium Sulphate 15%, Calcium Phosphate 4%, Sodium Chloride 15%, Rice Flour 16%.

### COMPARATIVE EXAMPLE 6

Component Proportion by Weight: Potassium Chloride 35% Tartaric Acid 28% Magnesium sulphate 23% Calcium Phosphate 4% Sodium Chloride 10%

COMPARATIVE EXAMPLE 7 Component Proportion by Weight: Potassium 17.30686242 Chloride 15.69313758 Magnesium 3.230742901 Sulphate 12.7692571 Calcium 2.234776637 Phosphate 1.765223363 Tartaric Acid 22% Rice Flour 25%

COMPARATIVE EXAMPLE 8 Component Proportion by Weight Potassium 18.88021355% Chloride 17.11978645% Magnesium 4.644192921% Sulphate 18.35580708% Calcium 6.145635751% Phosphate 4.854364249% Tartaric Acid 30%

COMPARATIVE EXAMPLE 9 Component Proportion by Weight Potassium 32.51592333% Chloride 29.48407667% Magnesium 4.644192921% Sulphate 18.35580708% Calcium 2.793470796% Phosphate 2.206529204% Tartaric Acid 10%

COMPARATIVE EXAMPLE 10 Component Proportion by Weight Potassium 13.11125941% Chloride 11.88874059% Calcium 5.416756019% Chloride 15.16563289% Sodium 9.834367113% Chloride 9.583243981% Citric Acid 25% Rice Flour 10%

COMPARATIVE EXAMPLE 11 Component Proportion by Weight Potassium 13.11125941% Chloride 11.88874059% Magnesium 3.02882147% Sulphate 11.97117853% Calcium 2.234776637% Phosphate 1.765223363% Sodium 5.900620268% Chloride 9.099379732% Tartaric Acid 25% Rice Flour 16%

COMPARATIVE EXAMPLE 12 Component Proportion by Weight Potassium 18.35576317% Chloride 16.64423683% Magnesium 4.644192921% Sulphate 18.35580708% Calcium 1.117388318% Phosphate 0.882611682% Sodium 3.933746845 % Chloride 6.066253155% Tartaric Acid 30 %

COMPARATIVE EXAMPLE 13 (50% table salt) Component Proportion by Weight Potassium 10.48900753% Chloride 9.510992475% Sulphate 10.37502139% Calcium 1.117388318% Phosphate 0.882611682% Sodium 19.66873423 % Chloride 30.33123577% Tartaric Acid 13.0000000 %, Ascorbic Acid 2.00000%

### PROCESSING PROCEDURES

The particle size distribution of the composition can be selected so that it pours in a manner similar to table salt. The following procedures may be employed.

### PROCEDURE A

1.1 Weight room and workplaces must be clean and tidy, as do machines and instruments. 1.2 Verify that all the equipment, receptacles and raw materials are available. The storage of the raw materials should be done in dry, clean, labeled and air proof sealed containers. 1.3 Sift each ingredient isolated. The useful range is the one that goes through a sieve of 40 and does not go through a sieve of 120. The rest is disposable. 1.4 Raw materials must be weighed after they have been analyzed by the Quality Control Department. 1.5 Once the anti -humidity agent has been weighed, it should be divided into as many parts as there are ingredients to be used. 1.6 Each ingredient is processed in a mixer or a ball mill with the appropriate amount of anti-humidity agent until the agent is fully integrated with the ingredient. 1.7 Once the previous operation has been finished each ingredient is stored separately. 1.8 Once the ingredients have been prepared, they are placed in a mixer and mixed until the powders become homogeneous 1.9 Storage is done in dry environment in air-proof sealed containers. 1.10 The process is completed with the filling operation [0053] PROCEDURE B

1.1 Weight room and workplaces must be clean and tidy, as do machines and instruments. 1.2 Verify that all the equipment, receptacles and raw materials are available. The storage of the raw materials should be done in dry, clean, labeled and air-proof sealed receptacles. 1.3 Sift each ingredient isolated. The useful range is the one that goes through a sieve of 40 and does not go through a sieve o 120. The rest is disposable 1.4 Raw materials must be weighed once they have been analyzed by the Quality Control Department 1.5 Once the anti-humidity agent has been weighed, it is divided into as many parts as acidic ingredients are to be used. 1.6 Each acidic ingredient is processed in a mixer or a ball mill with its corresponding amount of anti-humidity agent until the agent is fully integrated with the ingredient. 1.7 Once the previous operation has been finished each acidic ingredient is stored separately. 1.8 Once the ingredients have been prepared, they have to be mixed in a mixer until powders become homogeneous. 1.9 Storage is done in dry environment in air-proof sealed containers. 1.10 The process is completed with the filling operation

### PROCEDURE C

1.1 Weight room and workplaces must be clean and tidy, as do machines and instruments. 1.2 Verify that all the equipment, recipients and raw materials are available. The storage of the raw materials should be done in dry, clean, labeled and air-proof sealed receptacles. 1.3 Raw materials must be weighed once they have been analyzed by the Quality Control Department. 1.4 Mineral-free water is added to the ingredients previously weighed until it becomes a saturated solution. 1.5 Filter the solution to eliminate the impurities and /or insoluble particles. 1.6 Crystallization. Once the solution has been filtered, it is poured on evaporation panels and heated. Once the water evaporates the remaining crystals are stored. 1.7 The process is completed with the filling operation.

It is to be understood that the foregoing description is given merely by way of illustration and that modifications and deviations may be made without departing from the scope of the invention, as defined by the claims.

## Claims

1. A sodium-free or low-sodium seasoning composition, comprising ascorbic acid and, as acidulants, citric acid and tartaric acid; a potassium salt; a calcium salt; a magnesium salt; and rice flour.

2. The seasoning composition of claim 1, which is a substitute for common salt in the household or the food processing industry.

3. The seasoning composition of claim 1, wherein the potassium salt is potassium citrate or potassium chloride and is present between 15 and 65% by weight; the acidulants are present between 5 and 40% by weight; the magnesium salt is magnesium sulphate and is present between 10 and 30% by weight; the calcium salt is calcium chloride or calcium phosphate and is present between 2 and 15% by weight; and rice flour is present between 2 and 40% by weight.

4. The seasoning composition of claim 1, wherein said composition comprises a mixture adapted as a seasoning for foodstuffs usable pre-, inter-, and post-cooking.

5. The seasoning composition of claim 1, containing between 15 and 50% by weight sodium chloride.

6. The seasoning composition of claim 1, containing iodine in an amount of 1 part per 30,000 by weight, or more.

7. The seasoning composition of claim 1, further comprising 0.5 to 8.5% by weight of flavoring agents selected from the group consisting of garlic powder, pepper powder, onion powder, celery powder, sweet basil, thyme powder, dehydrated parsley, sweet red pepper powder, and spicy red pepper and mixtures thereof.

8. The seasoning composition of claim 1, further comprising stabilizing agents fit for human consumption, including calcium phosphate and calcium silicate, present between 0.5 and 5% by weight.

9. The composition of claim 1, which is for household use, in a salt shaker.

10. The composition of claim 1, which is proportioned by weight: potassium chloride 33%, tartaric acid 20%, and ascorbic acid 2%, magnesium sulphate 16%, rice flour 25% and calcium phosphate 4%.

11. The composition of claim 1, which is proportioned by weight: potassium chloride 36%, tartaric acid 30%, magnesium sulphate 23%, calcium phosphate 11%.

12. The composition of claim 1,
which is proportioned by weight: potassium chloride 62%, tartaric acid 10%, magnesium sulphate 23%, calcium phosphate 5%,
or
which is proportioned by weight: potassium chloride 25%, citric acid 25%, calcium chloride 10%, sodium chloride 25%, magnesium chloride 5%, rice flour 10%.

13. The composition of claim 1,
which is proportioned by weight: potassium chloride 25%, tartaric acid 25%, magnesium sulphate 15%, calcium phosphate 4%, sodium chloride 15%, rice flour 16%,
or
which is proportioned by weight: potassium chloride 35%, tartaric acid 28%, magnesium sulphate 23%, calcium phosphate 4%, sodium chloride 10%.

14. A method for seasoning food with a salty taste, comprising: adding to food for human consumption an effective amount of a sodium-free or low-sodium seasoning composition, comprising ascorbic acid and, as acidulants, citric acid and tartaric acid; a potassium salt; a calcium salt; a magnesium salt; and rice flour.

15. The method of claim 14, wherein the potassium salt is potassium citrate or potassium chloride and is present between 15 and 65% by weight; acidulants are present between 10 and 30% by weight; the magnesium salt is magnesium sulphate and is present between 10 and 30% by weight; the calcium salt is calcium chloride or calcium phosphate and is present between 2 and 15% by weight; and rice flour is present between 2 and 40% by weight.

## Patentansprüche

1. Natriumfreie oder natriumarme Würzzusammensetzung, die Ascorbinsäure und, als Säuerungsmittel, Citronensäure und Weinsäure; ein Kaliumsalz; ein Calciumsalz; ein Magnesiumsalz; und Reismehl aufweist.

2. Würzzusammensetzung nach Anspruch 1, die als Ersatz für gewöhnliches Salz im Haushalt oder in der lebensmittelverarbeitenden Industrie dient.

3. Würzzusammensetzung nach Anspruch 1, bei der das Kaliumsalz Kaliumcitrat oder Kaliumchlorid ist und mit einem Gewichtsanteil zwischen 15 und 65% vorhanden ist; die Säuerungsmittel mit einem Gewichtsanteil zwischen 5 und 40% vorhanden sind; das Magnesiumsalz Magnesiumsulfat ist und mit einem Gewichtsanteil zwischen 10 und 30% vorhanden ist; das Calciumsalz Calciumchlorid oder Calciumphosphat ist und mit einem Gewichtsanteil zwischen 2 und 15% vorhanden ist; und Reismehl mit einem Gewichtsanteil zwischen 2 und 40% vorhanden ist.

4. Würzzusammensetzung nach Anspruch 1, bei der die Zusammensetzung eine Mischung aufweist, die als Würzmittel für Lebensmittel vor, während und nach dem Kochen geeignet ist.

5. Würzzusammensetzung nach Anspruch 1, die Natriumchlorid mit einem Gewichtsanteil zwischen 15 und 50% enthält.

6. Würzzusammensetzung nach Anspruch 1, die Iod in einem Gewichtsanteil von 1 Teil pro 30.000 Teilen, oder mehr, enthält.

7. Würzzusammensetzung nach Anspruch 1, die ferner einen Gewichtsanteil von 0,5 bis 8,5% Geschmacksstoffe enthält, die aus der Gruppe ausgewählt sind, die aus Knoblauchpulver, Pfefferpulver, Zwiebelpulver, Selleriepulver, Basilikum, Thymianpulver, getrockneter Petersilie, süßem roten Paprikapulver, scharfem roten Paprika, und Mischungen davon, besteht.

8. Würzzusammensetzung nach Anspruch 1, die ferner Stabilisatoren enthält, die zum menschlichen Verzehr geeignet sind, einschließlich Calciumphosphat und Calciumsilicat, und zwar mit einem Gewichtsanteil zwischen 0,5 bis 5%.

9. Würzzusammensetzung nach Anspruch 1, zur Verwendung im Haushalt, in einem Salzsteuer.

10. Würzzusammensetzung nach Anspruch 1, die die folgenden Gewichtsanteile aufweist: Kaliumchlorid 33%, Weinsäure 20% und Ascorbinsäure 2%, Magnesiumsulfat 16%, Reismehl 25% und Calciumphosphat 4%.

11. Zusammensetzung nach Anspruch 1, die die folgenden Gewichtsanteile aufweist: Kaliumchlorid 36%, Weinsäure 30%, Magnesiumsulfat 23%, Calciumphosphat 11%.

12. Zusammensetzung von Anspruch 1,
die die folgenden Gewichtsanteile aufweist: Kaliumchlorid 62%, Weinsäure 10%, Magnesiumsulfat 23%, Calciumphosphat 5%,
oder
die die folgenden Gewichtsanteile aufweist: Kaliumchlorid 25%, Citronensäure 25%, Calciumchlorid 10%, Natriumchlorid 25%, Magnesiumchlorid 5%, Reismehl 10%.

13. Zusammensetzung nach Anspruch 1,
die die folgenden Gewichtsanteile aufweist: Kaliumchlorid 25%, Weinsäure 25%, Magnesiumsulfat 15%, Calciumphosphat 4%, Natriumchlorid 15%, Reismehl 16%,
oder
die die folgenden Gewichtsanteile aufweist: Kaliumchlorid 35%, Weinsäure 28%, Magnesiumsulfat 23%, Calciumphosphat 4%, Natriumchlorid 10%.

14. Verfahren zum Würzen von Lebensmitteln mit einem salzigen Geschmack, umfassend: zu Lebensmitteln zum menschlichen Verzehr wird eine wirksame Menge einer natriumfreien oder natriumarmen Würzzusammensetzung hinzugefügt, die Ascorbinsäure und, als Säuerungsmittel, Citronensäure und Weinsäure; ein Kaliumsalz; ein Calciumsalz; ein Magnesiumsalz; und Reismehl aufweist.

15. Verfahren nach Anspruch 14, bei dem das Kaliumsalz Kaliumcitrat oder Kaliumchlorid ist und mit einem Gewichtsanteil zwischen 15 und 65% vorhanden ist; Säuerungsmittel mit einem Gewichtsanteil zwischen 10 und 30% vorhanden sind; das Magnesiumsalz Magnesiumsulfat ist und mit einem Gewichtsanteil zwischen 10 und 30% vorhanden ist; das Calciumsalz Calciumchlorid oder Calciumphosphat ist und mit einem Gewichtsanteil zwischen 2 und 15% vorhanden ist; und Reismehl mit einem Gewichtsanteil zwischen 2 und 40% vorhanden ist.

## Revendications

1. Composition d'assaisonnement sans sodium ou à faible teneur en sodium, comprenant de l'acide ascorbique et, en tant qu'acidulants, de l'acide citrique et de l'acide tartrique ; un sel de potassium ; un sel de calcium ; un sel de magnésium ; et de la farine de riz.

2. Composition d'assaisonnement selon la revendication 1, qui est un substitut pour le sel courant dans la maison ou l'industrie de transformation alimentaire.

3. Composition d'assaisonnement selon la revendication 1, dans laquelle le sel de potassium est le citrate de potassium ou le chlorure de potassium et est présent entre 15 et 65 % en poids ; les acidulants sont présents entre 5 et 40 % en poids ; le sel de magnésium est le sulfate de magnésium et est présent entre 10 et 30 % en poids ; le sel de calcium est le chlorure de calcium ou le phosphate de calcium et est présent entre 2 et 15 % en poids ; et la farine de riz est présente entre 2 et 40 % en poids.

4. Composition d'assaisonnement selon la revendication 1, dans laquelle ladite composition comprend un mélange adapté en tant qu'assaisonnement pour des produits alimentaires aptes à être utilisés avant, pendant et après la cuisson.

5. Composition d'assaisonnement selon la revendication 1, contenant entre 15 et 50 % en poids de chlorure de sodium.

6. Composition d'assaisonnement selon la revendication 1, contenant de l'iode dans une quantité de 1 partie pour 30 000 en poids, ou plus.

7. Composition d'assaisonnement selon la revendication 1, comprenant en outre 0,5 à 8,5 % en poids d'agents aromatisants choisis dans le groupe consistant en de la poudre d'ail, de la poudre de poivre, de la poudre d'oignon, de la poudre de céleri, du basilic, de la poudre de thym, du persil déshydraté, de la poudre de piment rouge doux et du piment rouge épicé et leurs mélanges.

8. Composition d'assaisonnement selon la revendication 1, comprenant en outre des agents stabilisants adaptés pour une consommation humaine, comprenant le phosphate de calcium et le silicate de calcium, présents entre 0,5 et 5 % en poids.

9. Composition selon la revendication 1, qui est pour un usage domestique, dans une salière.

10. Composition selon la revendication 1, qui présente les proportions en poids suivantes : chlorure de potassium 33 %, acide tartrique 20 % et acide ascorbique 2 %, sulfate de magnésium 16 %, farine de riz 25 % et phosphate de calcium 4 %.

11. Composition selon la revendication 1, qui présente les proportions en poids suivantes : chlorure de potassium 36 %, acide tartrique 30 %, sulfate de magnésium 23 %, phosphate de calcium 11 %.

12. Composition selon la revendication 1,
présente les proportions en poids suivantes : chlorure de potassium 62 %, acide tartrique 10 %, sulfate de magnésium 23 %, phosphate de calcium 5 %,
ou
présente les proportions en poids suivantes : chlorure de potassium 25 %, acide citrique 25 %, chlorure de calcium 10 %, chlorure de sodium 25 %, chlorure de magnésium 5 %, farine de riz 10 %.

13. Composition selon la revendication 1,
présente les proportions en poids suivantes : chlorure de potassium 25 %, acide tartrique 25 %, sulfate de magnésium 15 %, phosphate de calcium 4 %, chlorure de sodium 15 %, farine de riz 16 %,
ou
présente les proportions en poids suivantes : chlorure de potassium 35 %, acide tartrique 28 %, sulfate de magnésium 23 %, phosphate de calcium 4 %, chlorure de sodium 10 %.

14. Procédé pour assaisonner des aliments avec un goût salé, comprenant : ajouter aux aliments pour la consommation humaine une quantité efficace d'une composition d'assaisonnement sans sodium ou à faible teneur en sodium, comprenant de l'acide ascorbique et, en tant qu'acidulants, de l'acide citrique et de l'acide tartrique ; un sel de potassium ; un sel de calcium ; un sel de magnésium ; et de la farine de riz.

15. Procédé selon la revendication 14, dans lequel le sel de potassium est le citrate de potassium ou le chlorure de potassium et est présent entre 15 et 65 % en poids ; les acidulants sont présents entre 10 et 30 % en poids ; le sel de magnésium est le sulfate de magnésium et est présent entre 10 et 30 % en poids ; le sel de calcium est le chlorure de calcium ou le phosphate de calcium et est présent entre 2 et 15 % en poids ; et la farine de riz est présente entre 2 et 40 % en poids.
